# EUROPÄISCHE PATENTANMELDUNG

(11) **EP 1 671 859 A1**
(43) Veröffentlichungstag der Anmeldung: **21.06.2006**
(21) Anmeldenummer: 05026833.3
(22) Anmeldetag: 08.12.2005
(51) Int. Cl.: B60R 21/276

(54) **Gassackmodul mit Abströmöffnung**

(30) Priorität: 16.12.2004 DE 202004019448 U
(71) Anmelder: TRW Automotive Safety Systems GmbH, 63743 Aschaffenburg (DE)
(72) Erfinder: Kreuzer, Martin, 63839 Kleinwallstadt (DE)
(74) Vertreter: Strass, Jürgen

(57) **Zusammenfassung**

Ein Gassackmodul für eine Fahrzeuginsassen-Rückhaltevorrichtung hat eine in einem festen Bauteil (10) des Gassackmoduls gebildete Abströmöffnung (12), durch die Gas entweichen kann. Über der Abströmöffnung (12) ist eine die Abströmöffnung (12) in einem Abstand überdeckende Platte (14) angeordnet. Die Platte (14) ist elastisch auf dem festen Bauteil (10) gelagert.

## Beschreibung

Die Erfindung betrifft ein Gassackmodul für eine Fahrzeuginsassen-Rückhaltevorrichtung mit einer in einem festen Bauteil des Gassackmoduls gebildeten Abströmöffnung, durch die Gas entweichen kann.

Grundsätzlich soll bei einem Gassackmodul der Gassack mit dem vom Gasgenerator erzeugten Gas möglichst schnell befüllt werden. In bestimmten Fällen ist es allerdings wünschenswert, die Gasmenge bzw. den Innendruck im Gassack an besondere Bedingungen anzupassen. Zu diesem Zweck können im Gassack selbst oder in festen Bauteilen des Gassackmoduls freigebbare Abströmöffnungen vorgesehen sein.

Aus der US 2004/0 051 285 A1 ist beispielsweise ein Gassackmodul mit Ventilklappen bekannt, die in einem Gasgeneratorträger gebildete Abströmöffnungen verschließen bzw. freigeben können. Die Ventilklappen sind mittels Fangbändern mit einem dem Fahrzeuginsassen zugewandten Teil des Gassackgewebes verbunden. Die Ventilklappen befinden sich bei Aktivierung des Gassackmoduls zunächst in der Öffnungsstellung, so daß Gas entweichen kann. Tritt der sich entfaltende Gassack sehr früh in Kontakt mit dem Fahrzeuginsassen, bleiben die Abströmöffnungen offen. Dadurch wird der Druck des sich entfaltenden Gassacks und damit die auf den Fahrzeuginsassen ausgeübte Kraft reduziert. Befindet sich der Fahrzeuginsasse dagegen in einer Position, die weiter vom Gassackmodul entfernt ist, werden die Abströmöffnungen im Verlauf der weiteren Entfaltung mittels der Fangbänder gegen den Innendruck des Gassacks verschlossen, so daß kein Gas mehr abströmen kann. In der US 2004/0 051 285 A1 ist auch ein anderes Konzept erwähnt, gemäß dem die Ventilklappen zunächst geschlossen sind und sich erst bei zunehmendem Gassackinnendruck öffnen.

Die Erfindung schafft ein Gassackmodul mit einer Abströmöffnung, deren effektiver Querschnitt sich mit einfachen Mitteln selbst reguliert.

Das erfindungsgemäße Gassackmodul für eine Fahrzeuginsassen-Rückhaltevorrichtung umfaßt eine in einem festen Bauteil des Gassackmoduls gebildete Abströmöffnung, durch die Gas abströmen kann, und ist dadurch gekennzeichnet, daß über der Abströmöffnung eine die Abströmöffnung in einem Abstand überdeckende Platte angeordnet ist, die elastisch auf dem festen Bauteil gelagert ist.

Die erfindungsgemäße Konstruktion ermöglicht eine automatische Anpassung der abströmenden Gasmenge in Abhängigkeit des im Inneren des Gassacks herrschenden Drucks. Je höher der Gassackinnendruck ist, desto größer sind die Kräfte, die auf die über der Abströmöffnung angeordnete Platte wirken. Aufgrund der elastischen Lagerung wird die Platte stärker gegen die Abströmöffnung gedrückt, so daß sich der effektive Abströmquerschnitt verringert und weniger Gas entweichen kann.

Eine kostengünstig umsetzbare Ausführungsform sieht vor, daß die Platte auf mehreren um die Abströmöffnung angeordneten elastischen Elementen aufliegt.

Die Erfindung wird nachfolgend anhand eines Ausführungsbeispiels unter Bezugnahme auf die beigefügten Zeichnungen beschrieben. In den Zeichnungen zeigen:
- Figur 1 eine seitliche Schnittansicht eines Teils eines erfindungsgemäßen Gassackmoduls mit einer Abströmöffnung; und
- Figur 2 eine Draufsicht auf den Ausschnitt des Gassackmoduls aus Figur 1.

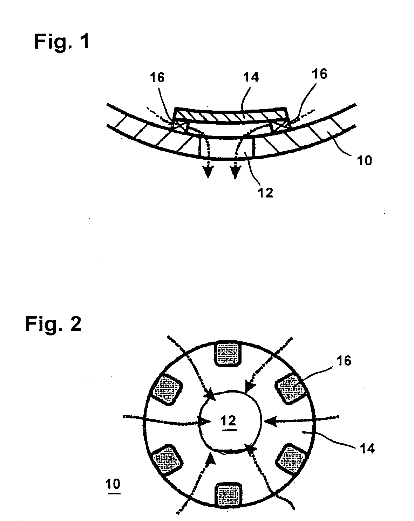

In Figur 1 ist ein festes Bauteil 10 eines Gassackmoduls dargestellt, das z.B. ein Gasgeneratorträger oder eine Wand eines Modulgehäuses sein kann. In dem Bauteil 10 ist eine Abströmöffnung 12 gebildet, durch die ein Teil des für die Befüllung des Gassacks des Moduls bereitgestellten Gases entweichen kann. Auf der Innenseite des Bauteils 10 überdeckt eine Platte 14 die Abströmöffnung 12 in einem vorbestimmten Abstand. Der Abstand ist durch mehrere elastische Elemente 16 vorgegeben, auf denen die Platte 14 gelagert ist.

In Figur 2 ist die Platte 14 transparent dargestellt, um die Anordnung der elastischen Elemente 16 sichtbar zu machen. Die elastischen Elemente 16 sind in Umfangsrichtung voneinander beabstandet um die Abströmöffnung 12 herum plaziert, so daß zwischen den Elementen 16, begrenzt durch das feste Bauteil 10 und die Platte 14, mehrere Strömungskanäle zur Abströmöffnung 12 gebildet sind. Die Höhe der Strömungskanäle ist durch den Abstand der Platte 14 vom festen Bauteil 10 bestimmt.

Bei einer Befüllung des Gassacks des Moduls werden die elastischen Elemente 16 im Falle eines stark steigenden Gassackinnendrucks aufgrund der auf die Platte 14 wirkenden Kräfte stärker zusammengedrückt. Dadurch verringert sich die Höhe der Strömungskanäle und damit der effektive Querschnitt der Abströmöffnung 12, d.h. die Menge des abströmenden Gases wird in Abhängigkeit vom Gassackinnendruck begrenzt.

## Patentansprüche

1. Gassackmodul für eine Fahrzeuginsassen-Rückhaltevorrichtung, mit einer in einem festen Bauteil (10) des Gassackmoduls gebildeten Abströmöffnung (12), durch die Gas entweichen kann, **dadurch gekennzeichnet, daß** über der Abströmöffnung (12) eine die Abströmöffnung (12) in einem Abstand überdeckende Platte (14) angeordnet ist, die elastisch auf dem festen Bauteil (10) gelagert ist.

2. Gassackmodul nach Anspruch 1, **dadurch gekennzeichnet, daß** die Platte (14) auf mehreren um die Abströmöffnung (12) angeordneten elastischen Elementen (16) aufliegt.
